# EUROPÄISCHE PATENTSCHRIFT

(11) **EP 0 923 256 B1**
(45) Veröffentlichungstag und Bekanntmachung des Hinweises auf die Patenterteilung: **18.04.2007**
(21) Anmeldenummer: 98250398.9
(22) Anmeldetag: 16.11.1998
(51) Int. Cl.: H04Q 7/22, H04Q 7/38

(54) **Verfahren zur Erfassung der Position eines Mobilfunkendgerätes für eine Positionserfassungszentrale**
Method for locating a mobile terminal for a locating centre
Procédé de localisation d'un terminal mobile pour un central de localisation

(30) Priorität: 05.12.1997 DE 19755891
(43) Veröffentlichungstag der Anmeldung: 16.06.1999
(73) Patentinhaber: ATX Europe GmbH, 40549 Düsseldorf (DE)
(72) Erfinder: Knabe, Rüdiger, 41460 Neuss (DE); Vieweg, Stefan, Dr., 47877 Willich (DE)
(74) Vertreter: Meissner, Peter E.

(56) Entgegenhaltungen:
- WO-A-96/25830
- MITSURU MURATA ET AL: "ENHANCING THE PERFORMANCE OF MOBILE COMMUNICATIONS SYSTEMS" INTERNATIONAL CONFERENCE ON UNIVERSAL PERSONAL COMMUNICATIONS, 12. Oktober 1993 (1993-10-12), Seiten 732-736, XP000534227

## Beschreibung

Die Erfindung betrifft ein Verfahren zur Erfassung der Position eines Mobilfunkendgerätes für eine Positionserfassungszentrale.

Die Erfassung des Nutzungsverhaltens von Einrichtungen, wie Straßenbahnen, Zügen, Bussen etc. erfolgt bisher in der Regel durch stichprobenartige Zählung. Denkbar wäre es ferner, an Ein- und Ausgängen von Bussen, Zügen etc. Zähleinrichtungen mit Lichtsschranken etc. einzurichten und die daraus gewonnenen Daten über eine Diskette oder dgl. in einen Computer einzulesen und an eine zentrale Positionserfassungs- und Statistikzentrale zu übermitteln. Dies ist jedoch relativ aufwendig.

Aus der WO 96 25830 A ist ein Verfahren zur Erfassung der Position eines Mobilfunkendgerätes für eine Positionserfassungszentrale bekannt, bei dem im Mobilfunkendgerät dessen Position in Form einer Zell-Kennung derjenigen Mobilfunknetzzelle, in welcher sich das Mobilfunkendgerät aktuell befindet, erfaßt wird und die die Zell-Kennung repräsentierenden Positionsdaten vom Mobilfunkendgerät über das Mobilfunknetz an eine Positionserfassungszentrale gesendet werden.

Der Erfindung liegt die Aufgabe zugrunde, eine möglichst effiziente Erfassung von Positionen von Einzelpersonen, insbesondere für spätere statistische Auswertungen, zu ermitteln. Die Aufgabe wird durch den Patentanspruch 1 gelöst. Ausgestaltungen ergeben sich aus den Unteransprüchen.

Die Erfindung ermöglicht einfach und kostengünstig eine flächendeckende, qualitativ hochwertige Erfassung von Einzelpersonen-Positionen, insbesondere für statistische spätere Erfassungen. Damit kann beispielsweise eine Nutzungsstatistik für Züge, Busse, Bahnen, Kaufhäuser, öffentliche Veranstaltungen etc. erfolgen. Auch können allgemein beliebige Positionsstatistiken erstellt werden; diese geben z.B. über die Zeit oder zeitunabhängig die Personendichte an einem oder mehreren Orten an. Eine aufwendige Änderung der Hardware einzelner Mobilfunkendgeräte (Handies) ist nicht erforderlich. Ein erfindungsgemäßes Verfahren kann in einem Handy beispielsweise als Programm implementiert sein. Das Programm kann beispielsweise auf einer Karte, wie einer SIM-Karte implementiert sein.

Die Position eines Mobilfunkendgerätes kann in vorgebbaren und evtl. auch per Funk änderbaren Zeitintervallen und/oder zu vorgegebenen und/oder änderbaren Zeiten erfolgen.

Die eine einzelne Position zu einem einzelnen Zeitpunkt repräsentierenden Daten können insbesondere als Kurznachricht (beispielsweise GSM-SMS) an eine Positionserfassungszentrale gesendet werden. Dabei können auch mehrere jeweils einen Zeitpunkt und/oder eine Position repräsentierende Daten in einer Kurznachricht zusammengefaßt werden und gemeinsam übertragen werden.

Die Erfassung kann auch anonym erfolgen.

Aufgrund übertragener Positionsdaten kann eine reale Position eines Mobilfunkendgerätes in einer Positionserfassungszentrale bzw. von einer Positionserfassungszentrale in Zusammenarbeit mit einem Mobilfunknetzbetreiber zumindest näherungsweise bestimmt werden. Die Bestimmung der realen Position aufgrund der von einem Mobilfunkendgerät jeweils zu einer Position als Positonsdaten übermittelten Zellkennung (derjenigen Mobilfunknetzzellkennung, in welcher sich das Mobilfunkendgerät jeweils aktuell befindet oder analog einer Basisstation etc.) ist möglich aufgrund einer Tabelle mit realen Positionen oder Ortsbereichen oder dgl. und zugeordneten Mobilfunkzellkennungen; eine derartige Positions-/Zellkennungs-Tabelle wird sich in der Regel bei einem Mobilfunknetzbetreiber (einer Mobilfunknetzzentrale etc.) befinden, welcher von der Positionserfassungszentrale Datensätze mit Zellkennungen übermittelt werden und von welchem jeweils zugeordnete Positionen zurückübermittelt werden; dabei können Positionsdaten bei der Zurückübermittlung auch statistisch zusammengefaßt sein und/oder mit einer räumlichen Unschärfe versehen sein.

Aufgrund von ermittelten Positionen ist in der Positionserfassungszentrale eine statistische Auswertung möglich. Beispielsweise kann bestimmt werden, wieviele Personen (mit einem Mobilfunkendgerät zur Durchführung des Verfahrens) sich statistisch an einem Ort und/oder zu einer bestimmten Zeit aufhalten. Derartige Statistiken können insbesondere zur Auswertung der Frequentierung von Bahnen, Bussen, Straßenbahnen, öffentlichen Veranstaltungen etc. erfolgen.

Die Zellkennung derjenigen Mobilfunkzelle, in welcher sich ein Mobilfunkendgerät jeweils aktuell befindet, kann das Mobilfunkendgerät im Standby-Betrieb vom Mobilfunknetzbetreiber als Standardfunktionalität erhalten. Eine derartige Zellkennung ist in der Regel eine abstrakte Zahl, der jedoch vom Mobilfunknetzbetreiber ein räumlicher Bereich zugeordnet ist, d.h. der Mobilfunknetzbetreiber ist in der Lage, anhand dieser Zellkennung den räumlichen Bereich zu ermitteln.

Insbesondere wenn zeitlich nacheinander mehrere Positionserfassungen erfolgen, die unterschiedliche Zellkennungen ergeben, ist beispielsweise eine sehr genaue Zuordnung zu bestimmten Zügen, Bussen oder anderen öffentlichen Fortbewegungsmitteln möglich.

Das Verfahren kann besonders kostengünstig in einem Endgerät implementiert werden, da lediglich eine geringfügige Software-Änderung erforderlich ist. In einer Positionserfassungszentrale kann der Programmteil implementiert sein, welcher die Entgegennahme erfaßter Positionsdaten und, falls erforderlich, die Kommunikation mit einem Mobilfunknetzbetreiber ausführt.

Weitere Merkmale und Vorteile der Erfindung ergeben sich aus der nachfolgenden Beschreibung eines Ausführungsbeispiels anhand der Zeichnung. Dabei zeigt:

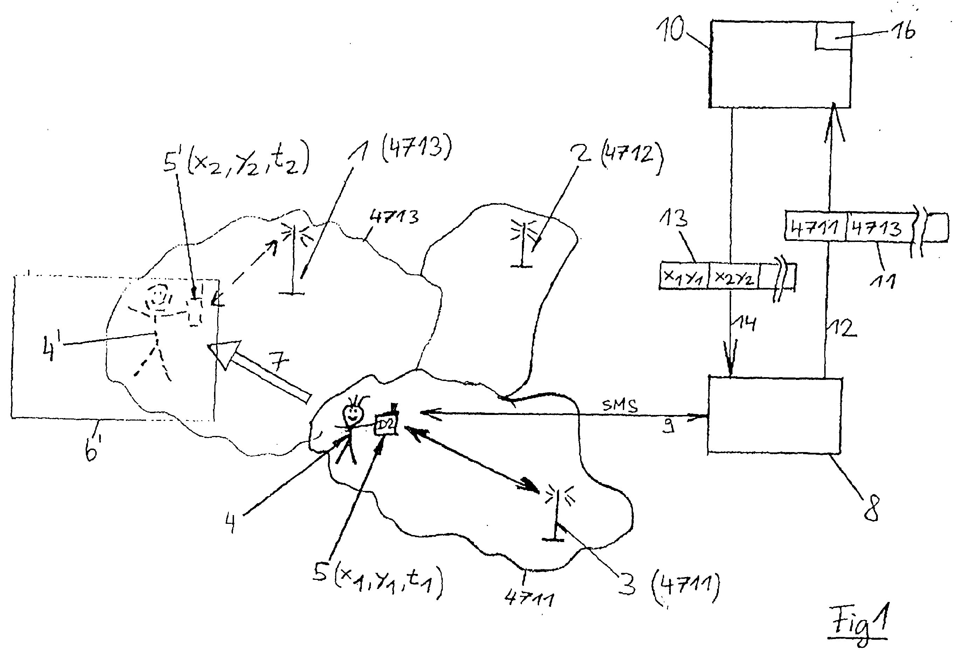

- Fig. 1: als grobe Übersicht die Kommunikation zwischen einem beispielhaften Mobilfunkendgerät und Basisstationen eines Mobilfunknetzes sowie zwischen einem Mobilfunkendgerät und einer Positionserfassungszentrale sowie zwischen einer Positionserfassungszentrale und einem Mobilfunknetzbetreiber.

Figur 1 zeigt auszugsweise drei Basisstationen 1, 2, 3 eines Mobilfunknetzes. Eine Einzelperson 4 mit einem Mobilfunkendgerät (Handy) bewegt sich in einer Straßenbahn 6' in Richtung des Pfeiles 7. Das Mobilfunkendgerät 5 der Person 4 ist im Standby-Betrieb, also in ein Mobilfunknetz eingewählt, ohne aktuell mit einem Teilnehmer zu kommunizieren. Jedoch ist eine erfindungsgemäße Positionserfassung ebenfalls möglich, während das Mobilfunkendgerät 5 über das Mobilfunknetz mit einem anderen Teilnehmer kommuniziert.

Während der Bewegung des Mobilfunkendgerätes 5 ist dies laufend mindestens einer Basisstation (1,2,3) des Mobilfunknetzes zugeordnet, wobei sich während der Bewegung die zugeordnete Mobilfunk-Basisstation ändert. Im dargestellten Beispiel ist das Mobilfunkendgerät 5 aktuell der Basisstation 3 (mit der Zellkennung 4711) zugeordnet. Einige Zeit später ist das gestrichelt dargestellte Mobilfunkendgerät 5' der Basisstation 1 mit der Zellkennung 4713 zugeordnet.

Eventuell ist auch die Zuordnung mehr als einer Zelle (4711, 4713) zu einer einzelnen Basisstation möglich, welche beispielsweise von einem Berggipfel in unterschiedliche Täler sendet.

Das Mobilfunkendgerät empfängt entweder laufend die Zellkennung 4711 derjenigen Basisstation 3, welcher es aktuell zugeordnet ist oder kann diese als Standardfunktionalität laufend oder in Zeitabständen abfragen. Deshalb kennt das Mobilfunkendgerät laufend die Zellkennung der Zelle, in der es sich augenblicklich befindet. Die Zellkennung kann das Mobilfunkendgerät zu bestimmten Zeiten und/oder in bestimmten Intervallen an eine Positionserfassungszentrale 8 übermitteln 9; die Übermittlung erfolgt zweckmäßig als Kurznachricht, beispielsweise GSM-SMS. Dabei können mehrere zu aufeinanderfolgenden Zeitpunkten festgestellte Zellkennungen 4711, 4713 in eine Kurznachricht zusammengefaßt und damit gemeinsam übermittelt 9 werden.

Es ist vorteilhaft, neben den Zellkennungen auch die Zeitpunkte mit zu übertragen.

Die Zellkennungen werden in Positionen (X1, Y1; X2, Y2) umgewandelt. Dies ist grundsätzlich im Endgerät oder in der Positionserfassungszentrale oder beim Mobilfunknetzbetreiber 10 möglich.

Wenn die Zuordnung von Zellkennungen zu tatsächlichen Positionen (oder analog örtlichen Bereichen) beim Mobilfunknetzbetreiber 10 erfolgt, werden von der Positionserfassungszentrale 8 Datensätze 11 an den Mobilfunknetzbetreiber 10 übermittelt 12. Diese Übermittlung kann online erfolgen. Jedoch kann die Übermittlung 12 auch offline, beispielsweise einmal im Monat etc. erfolgen. Von der Mobilfunknetzbetreiberzentrale 10 werden zu Datensätzen 11 mit Positionsdaten Positionen (oder örtliche Bereiche) repräsentierende Daten 13 an die Positionserfassungszentrale 8 zurückübermittelt 14. Dabei kann beispielsweise eine teilweise statistische Auswertung in der Mobilfunknetzbetreiberzentrale 10 erfolgen dahingehend, daß für bestimmte örtliche Bereiche lediglich die Anzahl der zu bestimmten Zeiten oder Zeiträumen darin enthaltenen Mobilfunkendgeräte zurückübermittelt 14 wird und/oder daß die rückübermittelten Positionen 13 mit einer Unschärfe versehen sind, die keine Rückschlüsse auf tatsächliche Mobilfunkzellen ermöglicht. Mit diesem Verfahren können auch datenschutzrechtliche Beschränkungen problemlos berücksichtigt werden.

In der Positionserfassungszentrale 8 kann aufgrund der von der Mobilfunkbetreiberzentrale 10 rückübermittelten Daten 13 (oder aufgrund von in der Positionserfassungszentrale 8 ermittelten Positionen) eine statistische Auswertung erfolgen.

Die statistische Auswertung kann insbesondere genutzt werden um festzustellen, in welchen Buslinien um welche Zeit wieviele Mobilfunkendgeräte befindlich sind, um damit eine statistische Grundlage für die Belegung von Mitteln wie Bussen etc. zu schaffen. Eventuell kann noch eine Korrelationsanalyse zwischen der Anzahl der Mobilfunkendgeräte an einem Ort und/oder zu bestimmten Zeiten und der (durch Zählung etc. gemessenen) tatsächlichen Anzahl von Personen zu bestimmten Orten und/oder Zeiten erfolgen. Damit ist aufgrund einer einmal geschaffenen Korrelationsdatenbasis mit Bezug zwischen der tatsächlichen Personenanzahl zu bestimmten Orten und/oder Zeiten zu der Anzahl der Mobilfunkendgeräte zu diesen Orten und/oder Zeiten eine statistische Ermittlung allein aufgrund aktuell erhaltener Endgerät-Daten möglich.

Das Verfahren ist nicht auf die hier beispielhaft aufgeführte Anwendung "statistische Auswertung" beschränkt. Vielmehr ist die Erfindung auch für weitere Anwendungen, z.B. positionsbezogene Informationsdienste, vorteilhaft nutzbar.

Ferner können zu Positions- und/oder Zeitdaten vom Mobilfunkendgerät zur Positionserfassungszentrale weitere Nutzdaten übertragen werden. Derartige Nutzdaten können vom Endgerät-Benutzer abgefragt oder eingegeben werden, z.B. kann ein Mobilfunkendgerät-Nutzer beim Einsteigen in einen Bus eine "1"-Taste und beim Austeigen eine "2"-Taste am Endgerät drücken etc.

## Patentansprüche

1. Verfahren zur Erfassung der Positionen von Mobilfunkendgeräten (5, 5') für eine statistische Auswertung in einer Positionserfassungszentrale (8),
wobei im Mobilfunkendgerät (5, 5') dessen Position zu bestimmten Zeitpunkten und/oder in bestimmten Zeitintervallen in Form der Zell-Kennung (4711, 4713) derjenigen Mobilfunknetzzelle, in welcher sich das Mobilfunkendgerät (5, 5') jeweils aktuell befindet, erfaßt wird,
wobei diese Zell-Kennung (4711, 4713) in Positionsdaten (X1,Y1; X2,Y2) umgewandelt wird und dann in der Positionserfassungszentrale (8) eine statistische Auswertung der ermittelten Positionen erfolgt, und zwar dahingehend, dass hieraus die Anzahl von Mobilfunkendgeräten (5, 5') an einem oder mehreren Orten ermittelt wird, und zwar über die Zeit oder zeitunabhängig, wobei die Umwandlung der Zell-Kennung (4711, 4713) in die Positionsdaten entweder vom Mobilfunkendgerät (5, 5') vorgenommen wird oder in der Positionserfassungszentrale (8) erfolgt, an die die Zell-Kennung (4711, 4713) vom Mobilfunkendgerät (5, 5') über das Mobilfunknetz gesendet worden ist und
wobei vom Mobilfunkendgerät (5, 5') an die Positionserfassungszentrale (8) den Zeitpunkt (t1,t2) einer Position (X1,Y1;X2,Y2) repräsentierende Daten (t1,t2) mitübertragen werden.

2. Verfahren nach Anspruch 1,
**dadurch gekennzeichnet,**
**dass** die Positionsdaten (4711, 4713) als Zeichenfolge per Kurznachricht, insbesondere GSM-SMS, vom Endgerät (5) an die Positionserfassungszentrale (8) gesendet werden.

3. Verfahren nach einem der vorhergehenden Ansprüche,
**dadurch gekennzeichnet,**
**dass** die Positionserfassungszentrale (8) ein Teilnehmer des-Mobilfunknetzes, über welches die Positionsdaten gesendet (9) werden, mit mindestens einer Telefonnummer ist.

4. Verfahren nach einem der vorhergehenden Ansprüche,
**dadurch gekennzeichnet,**
**dass** die Zellkennung (4711, 4713) der aktuell vom Mobilfunkendgerät (5, 5') benutzten Zelle vom Mobilfunkendgerät beim Mobilfunknetzbetreiber (3,1) angefordert und/oder von diesem (3,1) empfangen (15) wird.

5. Verfahren nach einem der vorhergehenden Ansprüche,
**dadurch gekennzeichnet,**
**dass** die Positionsdaten (4711, 4713) ohne Teilnehmerkennung (5) in der Positionserfassungszentrale (8) gespeichert werden.

6. Verfahren nach einem der vorhergehenden Ansprüche,
**dadurch gekennzeichnet,**
**dass** die Position eines Mobilfunkendgerätes (5, 5') zu bestimmten Zeitpunkten und/oder in bestimmten Zeitintervallen bestimmt und/oder gesendet (9) wird.

7. Verfahren nach einem der vorhergehenden Ansprüche,
**dadurch gekennzeichnet,**
**daß** die Position (X1, Y1; X2, Y2) eines Mobilfunkendgerätes (5, 5') durch Zuordnung jeweils der die aktuelle Mobilfunkzelle (3,1), mit welcher das Mobilfunkendgerät (5, 5') kommuniziert (15), repräsentierenden Zellkennung (4711; 4713) zur tatsächlichen Position (X1, Y1; X2, Y2) des Mobilfunkendgerätes (5) aufgrund einer Tabelle (16) mit Zellkennungen (4711, 4713) und zugeordneten Positionen (X1, Y1; X2, Y2) bestimmt wird.

8. Verfahren nach Anspruch 7,
**dadurch gekennzeichnet,**
**dass** die Tabelle (16) mit Zellkennungen und Positionen in einer Mobilfunknetzbetreiberzentrale (10) vorliegt.

9. Verfahren nach einem der vorhergehenden Ansprüche,
**dadurch gekennzeichnet,**
**dass** Zellkennungen (4711, 4713), die eine Positionserfassungszentrale (8) von einem Mobilfunkendgerät (5) erhielt, von dieser (8) an die Mobilfunkbetreiberzentrale (10) zur dortigen Positionsbestimmung (16) übermittelt werden.

10. Verfahren nach einem der vorhergehenden Ansprüche,
**dadurch gekennzeichnet,**
**dass** vom Mobilfunknetzbetreiber (10) tatsächliche Positionen (X1, Y1; X2, Y2) repräsentierende Daten per Festnetz oder per Mobilfunknetz an die Positionserfassungszentrale (8) übermittelt (14) werden.

11. Verfahren nach einem der vorhergehenden Ansprüche,
**dadurch gekennzeichnet,**
**dass** mit den eine Position und/oder Zeit repräsentierenden Daten vom Mobilfunkendgerät zur Positionserfassungszentrale (8) weitere Nutzdaten, insbesondere vom Mobilfunkendgerät-Nutzer, abgefragte Nutzdaten übertragen werden.

12. Verfahren nach einem der vorhergehenden Ansprüche,
**dadurch gekennzeichnet,**
**dass** von einem Mobilfunkendgerät (5) mehrere Positionen (X1, Y1; X2, Y2) zu aufeinanderfolgenden Zeitpunkten (t1; t2) im Endgerät zwischengespeichert und gemeinsam, insbesondere als Kurznachricht, übertragen (9) werden.

## Claims

1. A method of locating mobile radio terminals (5, 5') for statistical evaluation in a locating centre (8),
wherein, in the mobile radio terminal (5, 5'), its position is recorded at specified times and/or at specified time intervals in the form of the cell identification (4711, 4713) of that mobile radio network cell in which the mobile radio terminal (5, 5') is currently located,
wherein this cell identification (4711, 4713) is converted into positional data (X1, Y1; X2, Y2), and statistical evaluation of the determined positions then takes place in the locating centre (8) in order to determine therefrom the number of mobile radio terminals (5, 5') in one or more locations, either over time or independently of time, the conversion of the cell identification (4711, 4713) into the positional data either being carried out by the mobile radio terminal (5, 5') or taking place in the locating centre (8) to which the cell identification (4711, 4713) has been transmitted by the mobile radio terminal (5, 5') via the mobile radio network, and
wherein data (t1, t2) representing the time (tl, t2) of a position (X1, Y1; X2, Y2) are jointly transmitted by the mobile radio terminal (5, 5') to the locating centre (8).

2. A method according to claim 1, **characterised in that** the positional data (4711, 4713) are transmitted as a character sequence by short message, especially GSM-SMS, from the terminal (5) to the locating centre (8).

3. A method according to either one of the preceding claims, **characterised in that** the locating centre (8) is a subscriber of the mobile radio network, via which the positional data are transmitted (9), with at least one telephone number.

4. A method according to any one of the preceding claims, **characterised in that** the cell identification (4711, 4713) of the cell currently being used by the mobile radio terminal (5, 5') is requested by the mobile radio terminal from the mobile radio network operator (3, 1) and/or is received (15) by the latter (3, 1).

5. A method according to any one of the preceding claims, **characterised in that** the positional data (4711, 4713) are stored in the locating centre (8) without subscriber identification (5).

6. A method according to any one of the preceding claims, **characterised in that** the position of a mobile radio terminal (5, 5') is determined and/or transmitted (9) at specified times and/or at specified time intervals.

7. A method according to any one of the preceding claims, **characterised in that** the position (X1, Y1; X2, Y2) of a mobile radio terminal (5, 5') is determined by allocating the respective cell identification (4711, 4713), representing the mobile radio cell (3, 1) with which the mobile radio terminal (5, 5') is currently communicating, to the actual position (X1, Y1; X2, Y2) of the mobile radio terminal (5) with reference to a table (16) containing cell identifications (4711, 4713) and allocated positions (X1, Y1; X2, Y2).

8. A method according to claim 7, **characterised in that** the table (16) containing cell identifications and positions is present in a mobile radio network operator centre (10).

9. A method according to any one of the preceding claims, **characterised in that** cell identifications (4711, 4713), which are received from a mobile radio terminal (5) by a locating centre (8), are transmitted by the latter (8) to the mobile radio operator centre (10), where the position is determined (16).

10. A method according to any one of the preceding claims, **characterised in that** data representing actual positions (X1, Y1; X2, Y2) are transmitted (14) from the mobile radio network operator (10) to the locating centre (8) via a fixed network or a mobile radio network.

11. A method according to any one of the preceding claims, **characterised in that** further useful data, especially useful data requested from the mobile radio terminal user, are transmitted from the mobile radio terminal to the locating centre (8) together with the data representing a position and/or time.

12. A method according to any one of the preceding claims, **characterised in that** a plurality of positions (X1, Y1; X2, Y2) are temporarily stored in a mobile radio terminal (5) at successive times (tl, t2) and are jointly transmitted (9) by the terminal, especially as a short message.

## Revendications

1. Procédé de localisation de terminaux mobiles (5,5') pour une analyse statistique dans un central de localisation (8), la position du terminal mobile à des instants donnés et/ou à intervalles de temps donnés étant détectée dans le terminal mobile (5,5') sous la forme de l'identifiant (4711, 4713) de la cellule de réseau mobile dans laquelle se trouve actuellement le terminal mobile (5,5'), cet identifiant de cellule (4711,4713) étant converti en données de position (X1,Y1 ;X2,Y2) et une analyse statistique des positions déterminées ayant ensuite lieu dans le central de localisation (8), et, à partir de ces informations, le nombre de terminaux mobiles (5,5') se trouvant à un endroit ou plusieurs endroits étant déterminé, et ce dans le temps ou indépendamment du temps, la conversion de l'identifiant de cellule (4711,4713) en données de position étant réalisée par le terminal mobile (5,5') ou ayant lieu dans le central de localisation (8) auquel l'identifiant de cellule (4711,4713) a été transmis par le terminal mobile (5,5') par le biais du réseau mobile, et des données (t1, t2) représentant l'instant (t1,t2) d'une position (X1,Y1 ; X2,Y2) étant transmises en même temps par le terminal mobile (5, 5') au central de localisation (8).

2. Procédé selon la revendication 1,
**caractérisé en ce que** les données de position (4711,4713) sont transmises en tant que chaîne de caractères par message court, notamment GSM-SMS, par le terminal (5) au central de localisation (8).

3. Procédé selon l'une des revendications précédentes,
**caractérisé en ce que** le central de localisation (8) est un abonné, avec au moins un numéro de téléphone, du réseau mobile par le biais duquel les données de position sont transmises (9).

4. Procédé selon l'une des revendications précédentes,
**caractérisé en ce que** l'identifiant de cellule (4711,4713) de la cellule actuellement utilisée par le terminal mobile (5,5') est demandé par le terminal mobile auprès de l'opérateur de réseau mobile (3,1) et/ou reçu (15) par celui-ci (3,1).

5. Procédé selon l'une des revendications précédentes,
**caractérisé en ce que** les données de position (4711,4713) sont mémorisées sans identifiant d'abonné (5) dans le central de localisation (8).

6. Procédé selon l'une des revendications précédentes,
**caractérisé en ce que** la position d'un terminal mobile (5,5') à des instants donnés et/ou à intervalles de temps donnés est déterminée et/ou transmise (9).

7. Procédé selon l'une des revendications précédentes,
**caractérisé en ce que** la position (X1,Y1 ; X2,Y2) d'un terminal mobile (5, 5') est déterminée par affectation de l'identifiant de cellule (4711,4713) représentant la cellule mobile (3,1) actuelle avec laquelle le terminal mobile (5,5') communique (15) à la position effective (X1,Y1 ; X2,Y2) du terminal mobile (5) en fonction d'un tableau (16) d'identifiants de cellules (4711,4713) et de positions associées (X1,Y1 ; X2,Y2).

8. Procédé selon la revendication 7,
**caractérisé en ce que** le tableau (16) d'identifiants de cellules et de positions se trouve dans un central d'opérateur de réseau mobile (10).

9. Procédé selon l'une des revendications précédentes,
**caractérisé en ce que** des identifiants de cellules (4711, 4713), qu'un central de localisation (8) reçoit d'un terminal mobile (5), sont retransmis par celui-ci (8) au central d'opérateur de réseau mobile (10) pour que la détermination de position (16) y soit effectuée.

10. Procédé selon l'une des revendications précédentes,
**caractérisé en ce que** l'opérateur de réseau mobile (10) transmet (14) au central de localisation (8), par réseau fixe ou par réseau mobile, des données représentant des positions effectives (X1,Y1 ; X2,Y2).

11. Procédé selon l'une des revendications précédentes,
**caractérisé en ce qu'**avec les données représentant une position et/ou le temps, d'autres données utiles, notamment des données utiles interrogées par l'utilisateur du terminal mobile, sont transmises par le terminal mobile au central de localisation (8).

12. Procédé selon l'une des revendications précédentes,
**caractérisé en ce qu'**un terminal mobile (5) enregistre dans une mémoire intermédiaire dans le terminal plusieurs positions (X1,Y1 ; X2,Y2) à des instants (t1,t2) successifs et les transmet (9) ensemble, en particulier sous forme de message court.
